# EUROPÄISCHE PATENTANMELDUNG

(11) **EP 4 311 054 A1**
(43) Veröffentlichungstag der Anmeldung: **24.01.2024**
(21) Anmeldenummer: 22186268.3
(22) Anmeldetag: 21.07.2022
(51) Int. Cl.: H02H 7/122, H02J 7/00, H02H 3/087

(54) **VERFAHREN ZUM BEHANDELN EINES FEHLERS IN EINER HOCHSPANNUNGS-ANORDNUNG**

(71) Anmelder: Siemens Energy Global GmbH & Co. KG, 81739 München (DE)
(72) Erfinder: Rasic, Andreja, 91056 Erlangen (DE); Rubenbauer, Hubert, 91088 Bubenreuth (DE)

(57) **Zusammenfassung**

Die Erfindung betrifft ein Verfahren zum Abschalten einer Hochspannungsanordnung (1) mit einer Mehrzahl in Reihe geschalteter Spannungsquelleneinheiten (SQ1-5) gelöst, wobei jede Spannungsquelleneinheit eine Spannungsquellenreihenschaltung einer Spannungsquelle (B1-5) und einer Unterbrechungseinheit (S1-5) sowie einen Kurzschließer (KS1-5) in Parallelschaltung zu der Spannungsquellenreihenschaltung umfasst, bei dem im Fall eines Kurzschlusses in der Hochspannungsanordnung, bei dem eine einen Kurzschlussstrom treibende Spannung eine maximal zulässige Spannung einer ersten Unterbrechungseinheit einer ersten Spannungsquelleneinheit übersteigt, ein zweiter Kurzschließer einer zweiten Spannungsquelleneinheit geschlossen wird, worauf die erste Unterbrechungseinheit geöffnet wird.

## Beschreibung

Die Erfindung betrifft ein Verfahren zum Behandeln eines Fehlers in einer Hochspannungsanordnung.

In Hochspannungsanordnungen, die Reihenschaltungen von Spannungsquellen (z.B. Batterien oder PV-Module) umfassen, können derart hohe Spannungen entstehen, dass ein Abschalten der resultierenden Kurzschlussströme nicht mehr durch übliche, den einzelnen Spannungsquellen (z.B. Sicherungen in Batterien) zugeordnete Schutzelemente gewährleistet werden kann.

Das Problem kann dadurch gelöst werden, dass innerhalb der Reihenschaltung jede der einzelnen Spannungsquellen ein Unterbrechungselement enthält (z.B. Sicherung oder Schalter), das den Kurzschlussstrom bei Spannungen unterbrechen kann, die deutlich größer sind als die eigene Maximalspannung der Spannungsquelle (bis hin zu einer maximal zulässigen Spannung der gesamten Reihenschaltung). Dieser Lösung haftet jedoch der Nachteil an, dass solche Unterbrechungselemente relativ aufwändig und kostenintensiv sind.

Die Aufgabe der Erfindung ist es, ein artgemäßes Verfahren vorzuschlagen, das die vorstehenden Nachteile vermeidet.

Die Aufgabe wird erfindungsgemäß durch ein Verfahren zum Behandeln eines Fehlers in einer Hochspannungsanordnung mit einer Mehrzahl in Reihe geschalteter Spannungsquelleneinheiten gelöst, wobei jede Spannungsquelleneinheit eine Spannungsquellenreihenschaltung einer Spannungsquelle und einer Unterbrechungseinheit sowie einen Kurzschließer in Parallelschaltung zu der Spannungsquellenreihenschaltung umfasst, bei dem im Fall eines Kurzschlusses in der Hochspannungsanordnung, bei dem eine einen Kurzschlussstrom treibende Spannung eine maximal zulässige Spannung einer ersten Unterbrechungseinheit einer ersten Spannungsquelleneinheit übersteigt, ein zweiter Kurzschließer einer zweiten Spannungsquelleneinheit geschlossen wird, worauf die erste Unterbrechungseinheit geöffnet wird. Die Spannungsquelleneinheiten sind zueinander in Reihe geschaltet. Das bedeutet insbesondere, dass die an den Spannungsquelleneinheiten anstehenden Spannungen sich zu einer Gesamtspannung der Reihenschaltung der Spannungsquelleneinheiten addieren. Jede Spannungsquelleneinheit umfasst eine grundsätzlich beliebige Spannungsquelle, mittels der eine Spannung erzeugbar ist. Die Gesamtspannung der Reihenschaltung der Spannungsquelleneinheiten liegt grundsätzlich im Hochspannungsbereich also insbesondere oberhalb von 1kV, bevorzugt oberhalb von 15kV. In Reihe zu der Spannungsquelle ist die Unterbrechungseinheit angeordnet, parallel zu der Reihenanordnung der Spanungsquelle und Unterbrechungseinheit ist der Kurzschließer angeordnet. Eine Detektion des Kurzschlusses kann mittels einer Strom- und/oder Spannungsüberwachung durchgeführt werden. Übersteigt im Kurzschlussfall die Kurzschlussstrom treibende Spannung die maximal zulässige Spannung der Unterbrechungseinheit, so kann diese die Reihenschaltung ohne weitere Maßnahmen nicht unterbrechen. Dadurch, dass im Kurzschlussfall zunächst der Kurzschließer (der weiteren Spannungsquelleneinheit) geschlossen wird, steht nur noch maximal die Spannung der einzelnen Spannungsquelle als treibende Spannung des Kurzschlusses über der Unterbrechungseinheit der Spannungsquelle an. Dies erlaubt es vorteilhaft, Unterbrechungseinheiten mit einer relativ geringen maximalen Spannung einzusetzen.

Das Verfahren ist besonders dann vorteilhaft anwendbar, wenn die maximal zulässige Spannung der ersten Unterbrechungseinheit kleiner als die Summe der mittels der ersten und der zweiten Spannungsquelle erzeugbaren Nennspannungen ist.

Unterstützend kann vor dem Öffnen der ersten Unterbrechungseinheit der erste Kurzschließer geschlossen werden.

Vorzugsweise wird nach dem Schließen des zweiten Kurzschließers eine zweite Unterbrechungseinheit der zweiten Spannungsquelleneinheit geöffnet. Insbesondere können in einem Fehlerfall die Unterbrechungseinheiten aller derjenigen Spannungsquelleneinheiten geöffnet werden, die zu der den Kurzschlussstrom treibenden Spannung beitragen. Dazu können zweckmäßigerweise vorher die zugehörigen Kurzschließer geschlossen werden.

Zweckmäßigerweise wird ein Strom durch jede Spannungsquelleneinheit überwacht, wobei ein Kurzschluss in der Hochspannungsanordnung erkannt wird, wenn der Strom durch wenigstens eine der Spannungsquelleneinheiten 500 A, bevorzugt 1 kA übersteigt. Das Schließen des Kurzschließers kann demnach veranlasst werden, wenn der Strom durch die Spannungsquelle (deutlich) über dem zulässigen Maximalstrom der Spannungsquelle liegt (ein Betriebsstrom beträgt hier üblicherweise zwischen 100A und 500A, ein Kurzschlussstrom kann bis zu 3kA-10kA betragen). Es kann ergänzend oder alternativ auch eine detektierter Spannungseinbruch über der Einzelspannungsquelle oder innerhalb der Reihenschaltung der Einzelspannungsquellen als Auslösekriterium verwendet werden.

Geeigneterweise können im ersten und/oder zweiten Kurzschließer ein Thyristor (denkbar sind auch andere leistungselektronische Schalter) und/oder ein mechanischer Schalter verwendet werden. Insbesondere kann der Kurzschließer ein Thyristor in Scheibenzellenform sein. Gemäß anderen Ausführungen kann der Kurzschließer ein Vakuumschalter sein.

Vorzugsweise wird in der ersten Unterbrechungseinheit eine Sicherung und/oder ein leistungselektronischer Schalter verwendet. Die Sicherung kann beispielsweise eine Schmelzsicherung sein.

Gemäß einer Ausführungsform wird in der ersten Unterbrechungseinheit ein leistungselektronischer Schalter verwendet, der ein IGBT ist. Auch andere Schalter, wie IGCT, können hier geeigneterweise eingesetzt werden.

Geeigneterweise werden in der ersten Unterbrechungseinheit antiparallel gerichtete IGBTs verwendet, wobei jedem der IGBTs eine antiparallele Diode zugeordnet ist. Demnach umfasst die Unterbrechungseinheit einen ersten IGBT mit einer ersten Durchlassrichtung, wobei dem ersten IGBT eine erste Freilaufdiode antiparallel angeordnet ist. Die Unterbrechungseinheit umfasst ferner einen zweiten IGBT mit einer zweiten Durchlassrichtung, die der ersten Durchlassrichtung entgegengesetzt ist, wobei dem zweiten IGBT eine zweite Freilaufdiode antiparallel geschaltet ist. Die beiden IGBTs sind zueinander in Reihe geschaltet.

In der ersten Unterbrechungseinheit kann auch ein mechanischer Schalter verwendet werden. Denkbar ist auch ein hybrider Schalter als eine Kombination eines mechanischen und eines leistungselektronischen Schalters.

Es ist möglich, jedoch nicht notwendig, dass die Unterbrechungseinheiten und/oder die Kurzschließer aller Spannungsquelleneinheiten gleich bzw. gleichartig aufgebaut sind.

Obwohl die Wahl der verwendeten Spannungsquellen im Rahmen der Erfindung grundsätzlich beliebig ist, sind als Spannungsquelle Batterien, Superkondensatoren und/oder PV-Elemente besonders gut einsetzbar. Dabei können unterschiedliche Spannungsquellen in einer Hochspannungsanordnung kombiniert werden.

Zweckmäßigerweise erzeugt die Spannungsquelle in ihrem Betrieb eine Spannung zwischen 0,5kV und 5kV. Insbesondere können alle verwendeten Spannungsquellen Betriebsspannungen in dem genannten Spannungsbereich erzeugen.

Die Erfindung wird nachfolgend anhand eines in den Figuren 1 bis 4 dargestellten Ausführungsbeispiels weiter erläutert.
Figur 1 zeigt eine Hochspannungsanordnung in einer schematischen Darstellung;
Figur 2 zeigt die Hochspannungsanordnung der Figur 1 in einem Fehlerfall;
Figuren 3 und 4 zeigen jeweils Beispiele für eine Spannungsquelleneinheit für die Hochspannungsanordnung der Figuren 1 und 2.

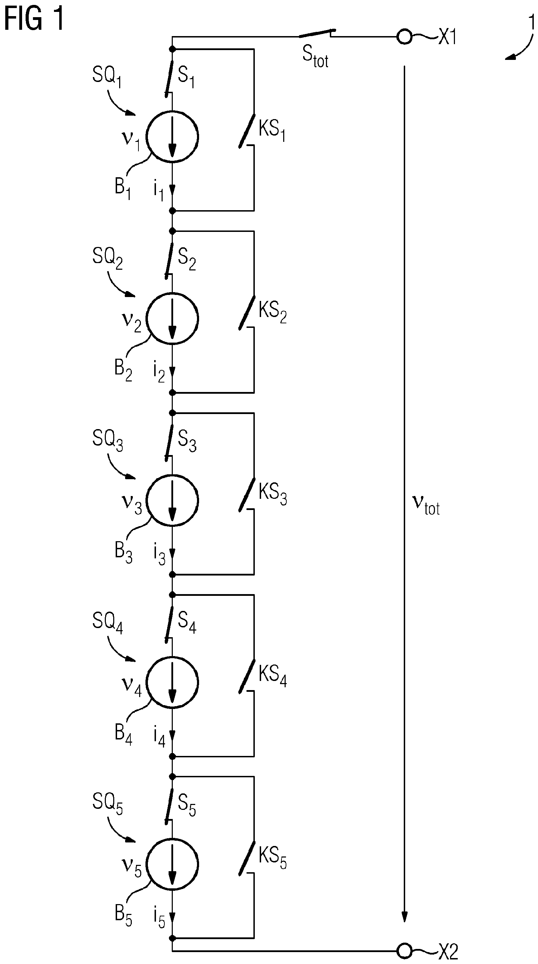

In Figur 1 ist eine Hochspannungsanordnung 1 dargestellt. Die Hochspannungsanordnung umfasst zwei Anschlüsse X1 und X2 zum Anschließen der Hochspannungsanordnung 1 an eine oder mehrere weitere Hochspannungsanlagen, wie beispielsweise einen Umrichter. Die Hochspannungsanordnung 1 umfasst eine Reihenschaltung von Spannungsquelleneinheiten SQ1 bis SQ5 sowie eines Schalters Stot zum Abschalten der Hochspannungsanordnung 1.

Jede einzelne Spannungsquelleneinheit SQ1-SQ5 umfasst eine Spannungsquelle B1 bis B5, die im dargestellten Beispiel eine Batterie bzw. eine Reihenschaltung und/oder Parallelschaltung von Batterien ist, die in einem Batterieschrank angeordnet sind. Die an den Spannungsquellen B1 bis B5 anstehenden Spannungen v1-v5 summieren sich zu einer Gesamtspannung vtot der Hochspannungsanordnung 1. Jede der Spannungsquelleneinheiten SQ1-SQ5 umfasst ferner eine Unterbrechungseinheit S1-S5, die jeweils in Reihe zu der zugeordneten Spannungsquelle B1-B5 geschaltet ist. Parallel dazu sind jeweils Kurzschließer KS1-KS5 vorgesehen. Im kurzschlussfreien Normalbetrieb der Hochspannungsanordnung 1 sind die Kurschließer KS1-KS5 geöffnet, die Unterbrechungseinheiten S1-S5 sowie der Schalter Stot geschlossen. Jede der Spannungsquellen B1-B5 erzeugt im Betrieb eine Spannung v1-v5 von bis zu 1,5kV. Der Strom durch die jeweilige Spannungsquelleneinheit SQ1-SQ5 wird mit il...i5 bezeichnet.

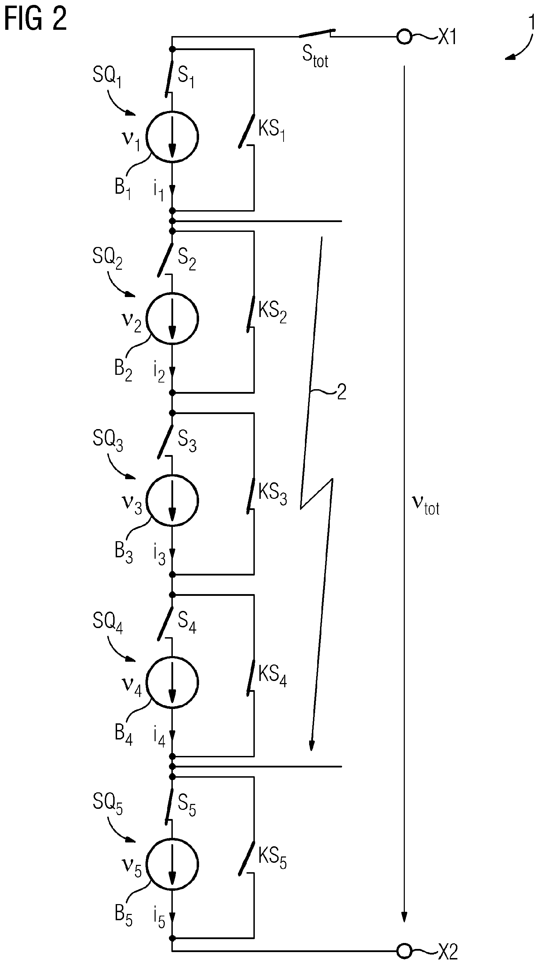

In Figur 2 ist die Hochspannungsanordnung 1 der Figur 1 in einem Kurzschlussfall dargestellt. Gleiche und gleichartige Elemente sind in den Figuren 1 und 2 zur besseren Übersichtlichkeit mit jeweils gleichen Bezugszeichen versehen.

Durch einen Pfeil ist ein Kurzschluss innerhalb der Reihenschaltung (über der zweiten, dritten und vierten Spannungsquelle B2, B3, B4) dargestellt. Dieser Kurzschluss kann durch den Schalter Stot nicht geklärt werden da dieser sich nicht im Kurzschlusskreis befindet (ähnlich wie auch die Unterbrechungseinheiten S1 und S5). Der Kurzschluss kann des Weiteren durch eine einzelne Unterbrechungseinheit S2...S4 nicht geklärt werden, weil die den Kurzschlussstrom treibende Spannung (die im dargestellten Beispiel der Summe v2+v3+v4 entspricht) dafür zu hoch ist. Wären keine Kurzschließer KS2, KS3, KS4 in den Spannungsquelleneinheiten SQ2-SQ4 vorhanden, müsste jede Unterbrechungseinheit S2-S4 den Kurzschlussstrom bei der dreifachen Einzelspannung der Spannungsquellen B2-B4 unterbrechen können. Indem die Kurzschließer KS2, KS3 und KS4 geschlossen werden, reicht für jede Spannungsquelle B2-B4 eine Unterbrechungseinheit S2-S4 aus, die den Kurzschlussstrom nur bei der einfachen Einzelspannung v2-v4 der Spannungsquelle B2-B4 trennen kann. Dementsprechend werden die Ströme i1-i5 durch die Spannungsquelleneinheiten SQ1-SQ5 überwacht (gemessen und ausgewertet). Sobald ein Strom i1-i5 eine vorgegebene Stromschwelle übersteigt, wird eine Schließung des zugeordneten Kurzschließers KS1-KS5 veranlasst. In dem in Figur 2 dargestellten Beispielfall übersteigen die Ströme i2-i4 die vorgegebene Stromschwelle. Entsprechend werden die Kurzschließer KS2-KS4 geschlossen. Durch das Schließen der Kurzschließer KS2-KS4 ergibt sich, dass
ein Kurzschlussstrom durch die zweite Unterbrechungseinheit S2 lediglich durch die zweite Spannungsquelle B2 getrieben wird,
ein Kurzschlussstrom durch die dritte Unterbrechungseinheit S3 lediglich durch die dritte Spannungsquelle B3 getrieben wird und
ein Kurzschlussstrom durch die vierte Unterbrechungseinheit S4 lediglich durch die vierte Spannungsquelle B4 getrieben wird.

Somit kann jede der Unterbrechungseinheiten S2-S4 nun geöffnet werden, wodurch der Fehler geklärt wird.

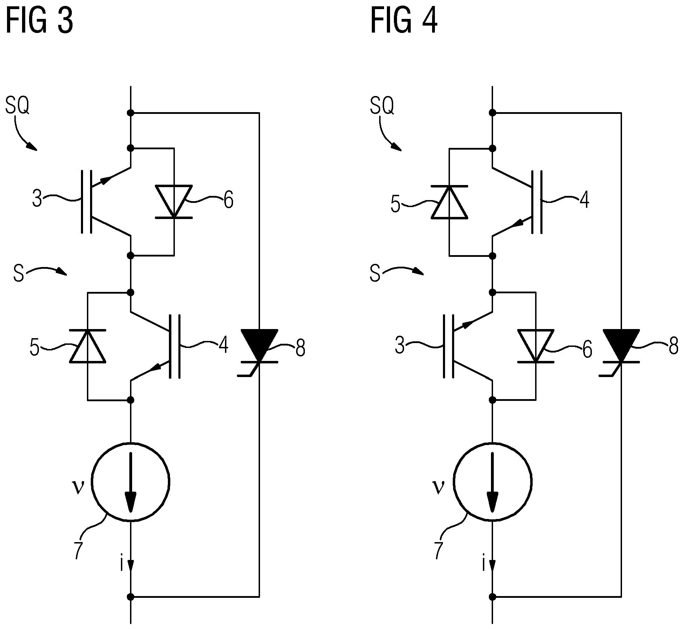

In Figur 3 ist eine Spannungsquelleneinheit SQ dargestellt, die als eine der Spannungsquelleneinheiten SQ1-SQ5 der Hochspannungsanordnung 1 der Figuren 1 und 2 verwendbar ist. Die Spannungsquelleneinheit SQ umfasst eine Spannungsquelle 7, die beispielsweise eine Batterie, ein Superkondensator, ein PV-Element oder eine andere geeignete Spannungsquelle sein kann. Die Spannungsquelleneinheit umfasst eine Unterbrechungseinheit S in Reihe zur Spannungsquelle 7 sowie einen Kurzschließer 8 in einem Parallelzweig dazu. Die Unterbrechungseinheit S weist einen ersten IGBT 3 mit einer ersten Durchlassrichtung auf, wobei dem ersten IGBT 3 eine erste Freilaufdiode 6 antiparallel angeordnet ist. Die Unterbrechungseinheit S weist ferner einen zweiten IGBT 4 mit einer zweiten Durchlassrichtung auf, die der ersten Durchlassrichtung entgegengesetzt ist, wobei dem zweiten IGBT 4 eine zweite Freilaufdiode 5 antiparallel geschaltet ist. Die beiden IGBTs 3 und 4 sind zueinander in Reihe geschaltet.

In Figur 4 ist eine weitere Spannungsquelleneinheit dargestellt. Die Spannungsquelleneinheit der Figur 4 unterscheidet sich von der Spannungsquelleneinheit der Figur 3 dadurch, dass die beiden IGBT-Freilaufdioden-Kombinationen in ihrer Anordnung vertauscht sind. Auf diese Weise kann insbesondere eine Vereinfachung der Ansteuerung der IGBTs erreicht werden.

## Patentansprüche

1. Verfahren zum Behandeln eines Fehlers in einer Hochspannungsanordnung (1) mit einer Mehrzahl in Reihe geschalteter Spannungsquelleneinheiten (SQ1-SQ5), wobei jede Spannungsquelleneinheit (SQ1-SQ5) eine Spannungsquellenreihenschaltung einer Spannungsquelle (B1-B5) und einer Unterbrechungseinheit (S1-S5) sowie einen Kurzschließer (KS1-KS5) in Parallelschaltung zu der Spannungsquellenreihenschaltung umfasst, bei dem im Fall eines Kurzschlusses in der Hochspannungsanordnung (1), bei dem eine einen Kurzschlussstrom treibende Spannung eine maximal zulässige Spannung einer ersten Unterbrechungseinheit (S2) einer ersten Spannungsquelleneinheit (SQ2) übersteigt,
- ein zweiter Kurzschließer (KS3) einer zweiten Spannungsquelleneinheit (SQ3) geschlossen wird, worauf
- die erste Unterbrechungseinheit (S2) geöffnet wird.

2. Verfahren nach Anspruch 1, wobei die maximal zulässige Spannung der ersten Unterbrechungseinheit (S2) kleiner als die Summe der mittels der ersten und der zweiten Spannungsquelle (B2, B3) erzeugbaren Nennspannungen ist.

3. Verfahren nach einem der vorangehenden Ansprüche, wobei vor dem Öffnen der ersten Unterbrechungseinheit (S2) der erste Kurzschließer (KS2) geschlossen wird.

4. Verfahren nach einem der vorangehenden Ansprüche, wobei nach dem Schließen des zweiten Kurzschließers (KS3) eine zweite Unterbrechungseinheit (S3) der zweiten Spannungsquelleneinheit (SQ3) geöffnet wird.

5. Verfahren nach einem der vorangehenden Ansprüche, wobei ein Strom durch jede Spannungsquelleneinheit (SQ1-SQ5) überwacht wird, wobei ein Kurzschluss in der Hochspannungsanordnung (1) erkannt wird, wenn der Strom durch wenigstens eine der Spannungsquelleneinheiten (SQ1-SQ5) 1 kA übersteigt.

6. Verfahren nach einem der vorangehenden Ansprüche, wobei im ersten und/oder zweiten Kurzschließer (KS2, KS3) ein Thyristor und/oder ein mechanischer Schalter verwendet wird.

7. Verfahren nach einem der vorangehenden Ansprüche, wobei in der ersten Unterbrechungseinheit (S2) eine Sicherung und/oder ein leistungselektronischer Schalter verwendet wird.

8. Verfahren nach einem der vorangehenden Ansprüche, wobei in der ersten Unterbrechungseinheit (S2) ein leistungselektronischer Schalter verwendet wird, der ein IGBT ist.

9. Verfahren nach Anspruch 5, wobei in der ersten Unterbrechungseinheit (S2) antiparallel gerichtete IGBTs verwendet werden, wobei jedem der IGBTs eine antiparallele Diode zugeordnet ist.

10. Verfahren nach einem der vorangehenden Ansprüche, wobei in der ersten Unterbrechungseinheit (S2) ein mechanischer Schalter verwendet wird.

11. Verfahren nach einem der vorangehenden Ansprüche, wobei, als Spannungsquelle (B1-B5) eine (Mehrzahl von) Batterie, Superkondensator und/oder PV-Elemente verwendet werden.

12. Verfahren nach einem der vorangehenden Ansprüche, wobei die Spannungsquelle (B1-B5) in ihrem Betrieb eine Spannung zwischen 0,5kV und 5kV erzeugt.
